# FASCICULE DE BREVET EUROPEEN

(11) **EP 3 722 188 B1**
(45) Date de publication et mention de la délivrance du brevet: **11.01.2023**
(21) Numéro de dépôt: 20169191.2
(22) Date de dépôt: 10.04.2020
(51) Int. Cl.: B62D 33/077, B62D 33/04

(54) **CAMION PORTEUR AVEC ENTRETOISE INTERPOSÉE ENTRE LE CHÂSSIS ET LA CAISSE AUTOPORTANTE**
LASTKRAFTWAGEN MIT ZWISCHENSTÜCK ZWISCHEN FAHRGESTELL UND SELBSTTRAGENDEM AUFBAU
RIGID TRUCK WITH SPACER INSERTED BETWEEN THE FRAME AND THE SELF-SUPPORTING BODY

(30) Priorité: 11.04.2019 FR 1903885
(43) Date de publication de la demande: 14.10.2020
(73) Titulaire: Lecapitaine Industrie, 50000 Saint Lô (FR)
(72) Inventeur: BRZOKEWICZ, Olivier, 50000 SAINT LO (FR)
(74) Mandataire: Lavoix

(56) Documents cités:
- WO-A1-2005/002951
- CN-U- 203 237 305
- DE-U1- 29 800 368
- FR-A1- 2 811 955
- JP-A- S5 839 540

## Description

La présente invention concerne un camion porteur, du type comprenant un châssis et une caisse autoportante rapportée sur le châssis, la caisse autoportante étant en liaison directe avec le châssis.

Dans le domaine des véhicules commerciaux on distingue communément les camions porteurs qui possèdent, sur le même châssis, la cabine et un volume de chargement pour transporter les marchandises, des véhicules articulés, qui comprennent une partie motrice dépourvue de volume de chargement, appelée tracteur, à laquelle est attelée une semi-remorque dévolue au transport de marchandises. Le volume de chargement d'un camion porteur est généralement constitué d'un plateau, d'une citerne, d'une benne ou d'une caisse.

Il est connu de produire des camions porteurs par assemblage d'une caisse à un châssis-cabine préexistant. Toutefois, pour que le camion obtenu par ce procédé satisfasse aux normes de sécurité, le châssis du châssis-cabine doit le plus souvent être renforcé.

A cet effet, on ajoute usuellement un soubassement, également appelé fauxchâssis ou cadre de montage, entre le châssis et le plancher de la cabine. Ce soubassement est formé de deux longerons généralement reliés l'un à l'autre par des traverses, et la caisse et le châssis sont chacun fixés à ce soubassement, sans aucune fixation directe de l'un à l'autre, de telle sorte que le soubassement assure le transfert des efforts entre la caisse et le châssis tout en absorbant une partie de ces efforts. De sorte à apporter cette fonction de rigidification, le soubassement est le plus souvent réalisé en acier.

Un inconvénient de cette solution réside dans le poids du soubassement, qui est généralement conséquent et alourdit significativement le camion porteur, réduisant de ce fait sa charge utile.

Ces dernières années ont été développées des caisses qualifiées d'« autoportantes » dont le plancher est adapté pour assurer les fonctions du soubassement. Ces caisses peuvent ainsi être fixées directement au châssis, ce qui permet l'économie du soubassement et allège le camion, augmentant de ce fait sa charge utile. Un camion porteur équipé d'une telle caisse est connu, par exemple, de DE 296 07 597 U1.

Cette solution ne donne cependant pas entière satisfaction. En effet, en apposant la caisse directement sur le châssis, il devient nécessaire de former des tambours dans la caisse pour permettre le passage des roues, ce qui complexifie la construction de la caisse et augmente de ce fait son coût. En outre, les tambours gênent la circulation à l'intérieur de la caisse et compliquent l'agencement de marchandises à l'intérieur de cette dernière.

Un objectif de l'invention est ainsi d'obtenir un camion porteur allégé qui puisse être produit facilement. Un autre objectif est de faciliter la circulation à l'intérieur de la caisse.

A cet effet, l'invention a pour objet un camion porteur du type précité, dans lequel le camion porteur comprend en outre une entretoise interposée entre le châssis et la caisse autoportante.

Un exemple de camion porteur est connu par le document WO2005/002951 A1 dans lequel une entretoise est prévue entre la caisse autoportant et le châssis et qui est reliée à la fois au châssis et à la caisse autoportant.

Selon des modes de réalisation particuliers de l'invention, ce camion porteur présente également l'une ou plusieurs des caractéristiques suivantes, prise(s) isolément ou suivant toute(s) combinaison(s) techniquement possible(s) :
- le châssis comprend deux longerons de châssis espacés transversalement l'un de l'autre et l'entretoise comprend deux longerons d'entretoise espacés transversalement l'un de l'autre, chaque longeron d'entretoise étant interposé entre la caisse autoportante et un longeron de châssis respectif.
- l'entretoise est dépourvue de traverse reliant les longerons d'entretoise l'un à l'autre.
- l'entretoise comprend une pluralité de supports chacun accolé à une face latérale de l'un des longerons d'entretoise, la caisse autoportante étant fixée au châssis par des ensembles boulonnés s'étendant au travers desdits supports.
- chaque support est monté coulissant selon la direction longitudinale relativement au longeron d'entretoise auquel il est accolé.
- le châssis comprend une pluralité de consoles chacune fixée à une face latérale de l'un des longerons de châssis, chaque ensemble boulonné s'étendant à travers l'une desdites consoles et chaque support étant interposé entre la caisse autoportante et l'une desdites consoles et ayant une hauteur sensiblement égale à la distance de ladite console à la caisse autoportante.
- chaque ensemble boulonné comprend une vis avec une tête et une tige filetée, la tête étant en appui contre l'un du plancher et du châssis et la tige filetée étant boulonnée à l'autre du plancher et du châssis ;
- le camion porteur comprend un dispositif avant de liaison intermédiaire entre la caisse et le châssis, formé de deux organes de liaison intermédiaire fixés chacun à la caisse et à un longeron de châssis respectif.
- chaque organe de liaison intermédiaire est fixé à un longeron d'entretoise respectif.
- le camion porteur comprend un support de hayon élévateur pour la fixation d'un hayon élévateur au châssis, ledit support de hayon élévateur comportant deux platines chacune fixée à la caisse autoportante et à un longeron de châssis respectif.
- chaque platine est fixée à une face latérale du longeron de châssis respectif et à un plancher de la caisse autoportante.
- l'entretoise est réalisée en alliage d'aluminium ou en matériau composite.

D'autres caractéristiques et avantages de l'invention apparaîtront à la lecture de la description qui va suivre, donnée uniquement à titre d'exemple et faite en se référant aux dessins annexés, dans lesquels :
- [Fig 1] la Figure 1 est une vue de côté d'un camion porteur selon l'invention,
- [Fig 2] la Figure 2 est une vue de côté d'un sous-ensemble du camion porteur de la Figure 1,
- [Fig 3] la Figure 3 est une vue en coupe suivant le plan III-III du sous-ensemble de la Figure 2,
- [Fig 4] la Figure 4 est une vue en perspective d'un détail marqué IV du sous-ensemble de la Figure 2, et
- [Fig 5] la Figure 5 est une vue en perspective d'un détail marqué V du sous-ensemble de la Figure 2.

Dans la suite, les termes d'orientation utilisés s'entendent en référence au repère d'orientation usuel des véhicules, composé de :
- un axe longitudinal X, orienté de l'arrière vers l'avant,
- un axe transversal Y, orienté de la droite vers la gauche, perpendiculaire à l'axe longitudinal X et formant avec ce dernier un plan horizontal, et
- un axe vertical Z, orienté du bas vers le haut, perpendiculaire au plan horizontal et formant avec les axes X et Y un repère orthogonal direct.

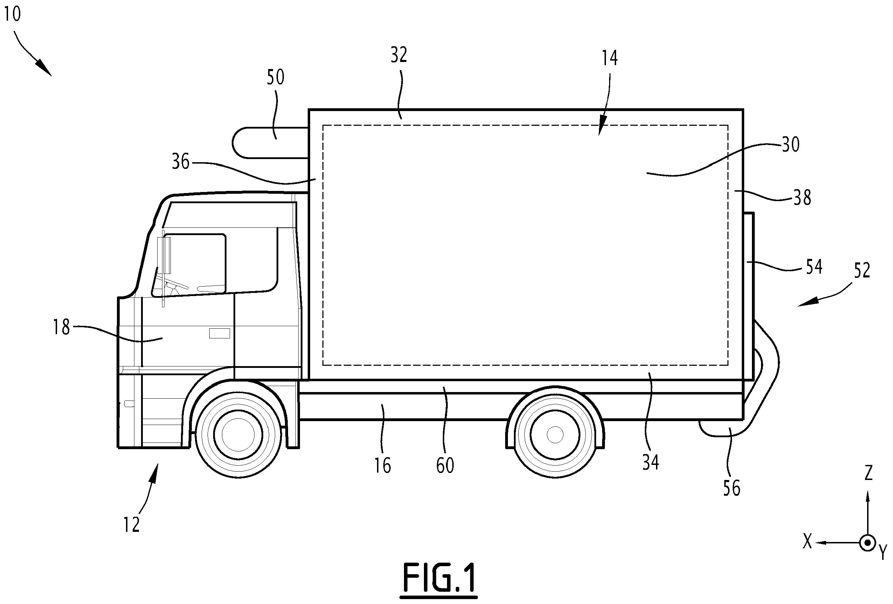

Le camion porteur 10 représenté sur la Figure 1 comprend, de manière connue, un châssis-cabine 12 et une caisse 14 rapportée sur le châssis-cabine 12.

Le châssis-cabine 12 comporte un châssis 16 et une cabine 18.

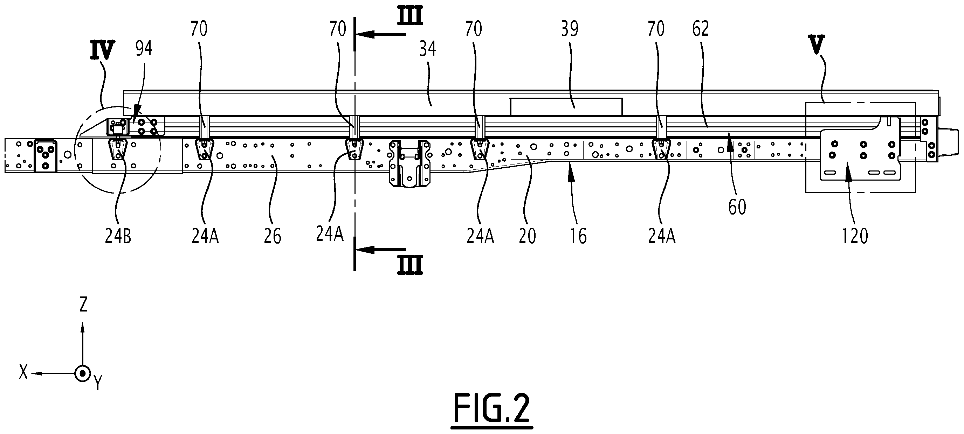

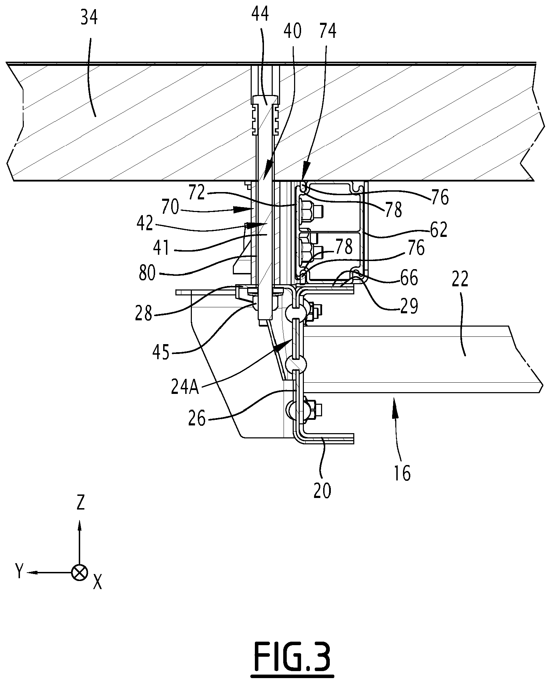

Le châssis 16 est formé de deux longerons de châssis 20 (Figure 2), allongés chacun suivant la direction longitudinale X et espacés transversalement l'un de l'autre, et d'une pluralité de traverses 22 (Figure 3), orientées chacune suivant la direction transversale Y et reliant les longerons 20 l'un à l'autre. Le châssis 16 forme la structure rigide de base du camion 10.

Chaque longeron 20 est avantageusement formé d'une pièce. A cet effet, chaque longeron 20 est ici constitué par un profilé. Dans l'exemple représenté, ce profilé est à section en U ouvert vers l'intérieur, c'est-à-dire en direction de l'autre longeron 20. En variante, le profilé présente une autre section.

Comme visible sur la Figure 2, le châssis 16 comprend également une pluralité de consoles 24A, 24B chacune fixée, en particulier rivetée, à une face latérale 26 de l'un des longerons 20. Cette face latérale 26 est en particulier une face latérale extérieure, c'est-à-dire qu'elle est orientée à l'opposé de l'autre longeron 20. Chaque console 24A, 24B fait ainsi saillie transversalement vers l'extérieur du camion 10 relativement au longeron 20 auquel elle est fixée.

Les consoles 24A, 24B sont espacées les unes des autres.

Les consoles 24A, 24B comprennent des consoles 24A disposées sous la caisse 14, c'est-à-dire telles que la caisse 14 sont disposée verticalement au droit desdites consoles 24A. Ici, les consoles 24A, 24B comprennent également deux consoles avant 24B intercalées entre le caisse 14 et la cabine 18, chacune desdites consoles avant 24B étant fixée à un longeron 20 respectif.

Comme visible sur la Figure 3, chaque console 24A, 24B comporte une tablette 28 sensiblement horizontale. Cette tablette 28 affleure sensiblement une face supérieure 29 du longeron 20 auquel la console 24A, 24B est fixée. Par « affleure sensiblement », on comprend que le décalage entre la tablette 28 et la face supérieure 29 est inférieur à 5 mm et peut également être nul.

Le châssis 16 est typiquement réalisé en acier.

De retour à la Figure 1, la cabine 18 est montée à l'avant du châssis 16. Elle est adaptée pour accueillir un conducteur du véhicule 10 et, avantageusement, au moins un passager.

La caisse 14 est montée sur le châssis 16, à l'arrière de la cabine 18.

La caisse 14 est adaptée pour le transport de marchandises. A cet effet, elle comprend, de manière connue, deux flancs 30 verticaux espacés transversalement l'un de l'autre (seul le flanc 30 gauche apparaissant sur les Figures), un pavillon 32 horizontal reliant les bords supérieurs des deux flancs 30, un plancher 34 horizontal reliant les extrémités inférieures des deux flancs 30, et une paroi avant 36 reliant les extrémités avant des deux flancs 30, les flancs 30, le pavillon 32, le plancher 34 et la paroi avant 36 définissant ensemble un espace intérieur (non représenté) adapté pour la réception de marchandises.

Les flancs 30, le pavillon 32 et le plancher 34 définissent ensemble une ouverture arrière pour l'accès des marchandises à l'espace intérieur de la caisse 14. Ici, la caisse 14 comprend également une porte 38 propre à ouvrir et fermer sélectivement ladite ouverture arrière. Cette porte 38 est typiquement une porte sectionnelle, comme par exemple la porte sectionnelle décrite dans la demande FR 17 58653, ou une porte battante.

La caisse 14 est autoportante, c'est-à-dire que le plancher 34 présente une résistance mécanique et un module d'inertie suffisants pour que la liaison directe de la caisse 14 au châssis 16 suffise à satisfaire aux exigences de sécurité s'appliquant à ce type de véhicule. A cet effet, le plancher 34 est par exemple tel que décrit dans FR 2 671 532 A1.

Comme visible sur la Figure 2, le plancher 34 présente des évidements 39 formés dans sa face inférieure (un seul de ces évidements 39 étant représenté sur la Figure), pour le passage des roues. Ces évidements 39 ne débouchent toutefois pas dans la face supérieure du plancher 34, ce qui permet de s'affranchir de tambours.

La caisse 14 est fixée en liaison directe avec le châssis 16. Comme visible sur la Figure 3, cette fixation est ici réalisée au moyen d'ensembles boulonnés 40 engagés à travers le plancher 34 et à travers les consoles 24A du châssis 16, en particulier à travers les tablettes 28 desdites consoles 24A. Chaque ensemble boulonné 40 comprend une tige filetée 41 engagée à travers le plancher 34 et vissée à un écrou 45 ou solidaire d'une tête de vis en appui contre une console 24A respective du châssis 16. Dans l'exemple représenté, la tige filetée 41 appartient à une vis 42 dont la tête 44 est en appui contre le plancher 34, et la tige filetée 41 est vissée à un écrou 45 en appui contre ladite console 24A respective. En variante (non représentée), pour au moins une partie des ensembles boulonnés 40, la tige filetée 41 appartient à une vis dont la tête est en appui contre ladite console 24A respective, et la tige filetée 41 est vissée à un écrou en appui contre le plancher 34.

Dans l'exemple représenté, la caisse 14 est réfrigérée. A cet effet, elle est équipée d'un bloc frigorifique 50, comme visible sur la Figure 1.

Ici, le camion porteur 10 comprend également un hayon élévateur 52. Ce hayon 52 est destiné à faciliter le chargement et le déchargement de marchandises dans la caisse 14. A cet effet, il comprend une plaque 54 et un mécanisme 56 d'articulation de la plaque 54 au reste du camion porteur 10, ce mécanisme 56 étant propre à déplacer la plaque 54 entre une position rétractée, dans laquelle la plaque 54 est plaquée contre la porte 38, comme représenté sur la Figure 1, et une position déployée (non représentée) dans laquelle la plaque 54 est sensiblement horizontale ou inclinée vers le bas depuis la base de la porte 38.

Dans une variante non représentée de l'invention, la caisse 14 ne comprend pas de porte 38. Dans ce cas, la plaque 54 du hayon élévateur 52 se substitue à la porte 38 pour ouvrir et fermer l'ouverture arrière de la caisse 14.

Selon l'invention, le camion porteur 10 comprend, comme visible sur la Figure 2, une entretoise 60 interposée entre le châssis 16 et la caisse 14.

Cette entretoise 60 est adaptée pour supporter des efforts de compression exercés par la caisse 14 sur l'entretoise 60 et comprimant cette dernière contre le châssis 16.

L'entretoise 60 comprend deux longerons d'entretoise 62 allongés chacun suivant la direction longitudinale X et espacés transversalement l'un de l'autre.

Chaque longeron d'entretoise 62 est avantageusement formé d'une pièce. A cet effet, chaque longeron d'entretoise 62 est ici constitué par un profilé. Dans l'exemple représenté, ce profilé est à section rectangulaire.

Comme visible sur la Figure 3, chaque longeron d'entretoise 62 est interposé entre la caisse 14 et un longeron de châssis 20 respectif. Chaque longeron d'entretoise 62 est ainsi aligné verticalement avec le longeron de châssis 20 respectif et repose contre la face supérieure 29 dudit longeron de châssis 20 respectif.

Dans l'exemple représenté, une plaque mince 66 est interposée entre le longeron 62 et ladite face supérieure 29. Cette plaque mince 66 compense l'écart de hauteur entre les tablettes 28 des consoles 24A fixées au longeron 20 et la face supérieure 29 dudit longeron 20.

De préférence, comme représenté ici, chaque longeron d'entretoise 62 ne dépasse ni vers l'avant ni vers l'arrière relativement à la caisse 14.

L'entretoise 60 comprend également une pluralité de supports 70 chacun accolé à une face latérale 72 de l'un des longerons d'entretoise 62.

Ici, tous les supports 70 sont accolés à une même face latérale 72 du longeron d'entretoise 62, cette face latérale 72 étant en particulier une face latérale extérieure, c'est-à-dire qu'elle est orientée à l'opposé de l'autre longeron 62. Chaque support 70 fait ainsi saillie transversalement vers l'extérieur du camion 10 relativement au longeron d'entretoise 62 auquel il est accolé.

En variante (non représentée), la face latérale 72 à laquelle les supports 70 sont accolés est une face latérale intérieure du longeron d'entretoise 62, de sorte que chaque support 70 fait ainsi saillie transversalement vers l'intérieur du camion 10 relativement au longeron d'entretoise 62 auquel il est accolé. En variante encore (non représentée), au moins deux supports 70 sont accolés à des faces latérales différentes du longeron d'entretoise 62, de sorte qu'au moins un support 70 fait ainsi saillie transversalement vers l'extérieur du camion 10 et au moins un autre support 70 fait ainsi saillie transversalement vers l'intérieur du camion 10 relativement au longeron d'entretoise 62 auquel ils sont accolés.

Chaque support 70 est monté coulissant selon la direction longitudinale X relativement au longeron d'entretoise 62 auquel il est accolé. Il dispose ainsi d'un degré de liberté en translation suivant la direction longitudinale X relativement au longeron d'entretoise 62 auquel il est accolé.

Chaque support 70 est en particulier monté au longeron d'entretoise 62 auquel il est accolé au moyen d'une liaison glissière 74. La translation suivant la direction longitudinale X constitue ainsi, aux tolérances de fabrication près, le seul degré de liberté du support 70 relativement au longeron d'entretoise 62 auquel il est accolé.

Cette liaison glissière 74 est ici réalisée par des profils recourbés 76 formés aux extrémités inférieure et supérieure du support 70, recourbés l'un vers l'autre et engagés dans des glissières 78 complémentaires formées dans le longeron 62.

Cette liaison des supports 70 aux longerons 62 facilite le positionnement des supports 70 et les stabilise lors de l'assemblage de la caisse 14 au châssis 16. La fabrication du camion porteur 10 est ainsi simplifiée.

Chaque support 70 définit une chambre intérieure verticale 80, traversante, pour le passage de la tige filetée 41 d'un ensemble boulonné 40 respectif de fixation de la caisse 14 au châssis 16.

Chaque support 70 est interposé entre la caisse 14 et une console 24A respective. Chaque longeron d'entretoise 62 est ainsi aligné verticalement avec la console 24A respective et repose contre la tablette 28 de ladite console 24A respective.

Chaque support 70 est en outre traversé par la tige filetée 41 engagée à travers ladite console 24A respective. Cette tige filetée 41 s'étend en particulier dans la chambre intérieure verticale 80, au travers dudit support 70.

Chaque support 70 a une hauteur égale à la distance de ladite console 24A respective à la caisse 14. Cette hauteur est ici sensiblement égale à la hauteur du longeron 62 auquel le support 70 est accolé.

Chaque support 70 a une section droite, prise selon un plan horizontal, dépourvue d'arête vive. Ceci réduit le volume du support 70, et donc sa masse.

En outre, la section droite de chaque support 70 est avantageusement en forme de triangle dont la base est orientée vers le longeron 62 contre lequel le support 70 est accolé et le sommet est disposé au plus près de la chambre 80. Ainsi, la masse du support 70 est minimisée.

Chaque support 70 est avantageusement réalisé d'une pièce.

L'entretoise 60 est en revanche dépourvue de traverse reliant les longerons 62 l'un à l'autre. En effet, puisque le plancher 34 de la caisse 14 suffit à apporter au châssis 16 la résistance mécanique nécessaire, il n'est pas nécessaire de prévoir de telle traverse au niveau de l'entretoise 60. L'entretoise 60 est ainsi allégée.

Compte-tenu des faibles contraintes qu'elle supporte, l'entretoise 60 ne nécessite pas d'être réalisée en acier. L'entretoise 60 est donc ici réalisée exclusivement en alliage d'aluminium. Autrement dit, chaque longeron 62 et chaque support 70 est ici réalisé exclusivement en alliage d'aluminium. En variante, l'entretoise 60 est réalisée exclusivement en matériau composite, ou en un autre matériau léger. Ceci contribue encore davantage à la légèreté de l'entretoise 60.

Par « matériau composite », on comprend ici et dans la suite aussi bien un matériau formé d'un renfort fibreux noyé dans une matrice de résine qu'un matériau multicouche alternant des couches présentant des résistances mécaniques différentes.

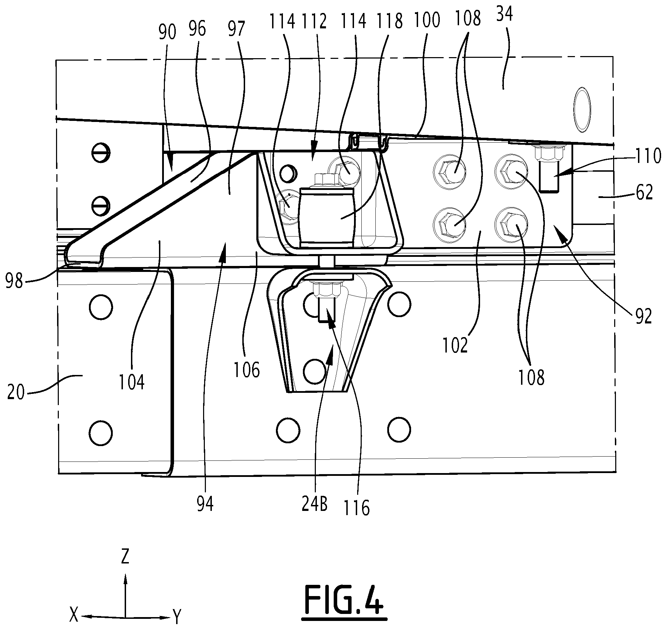

En référence à la Figure 4, le camion 10 comprend encore un dispositif avant 90 de liaison intermédiaire entre la caisse 14 et le châssis 16, assurant la liaison entre la caisse 14 et les consoles avant 24B.

Ce dispositif de liaison intermédiaire 90 comprend deux organes de liaison intermédiaire 92 fixés chacun à la caisse 14 et à un longeron de châssis 20 respectif, via une console avant 24B respective.

Chaque organe de liaison intermédiaire 92 comprend une tôle pliée 94 formant deux flasques 96, 97 verticaux, reliés l'un à l'autre par un socle 98 horizontal, et une aile 100 faisant saillie depuis l'un des flasques 96, 97 sensiblement parallèlement au socle 98.

Les flasques 96, 97 comprennent un flasque intérieur 96 et un flasque extérieur 97.

Chaque flasque 96, 97 comprend un tronçon d'extrémité arrière 102, un tronçon d'extrémité avant 104, et un tronçon intermédiaire 106 allant du tronçon d'extrémité arrière 102 au tronçon d'extrémité avant 104.

Les tronçons d'extrémité arrière 102 des flasques 96, 97 enserrent ensemble une extrémité avant d'un longeron d'entretoise 62.

Le tronçon d'extrémité avant 104 et le tronçon central s'étendent en avant de ce longeron d'entretoise 62.

Le tronçon d'extrémité avant 104 est biseauté, sa hauteur allant décroissant de l'arrière vers l'avant. Le tronçon d'extrémité avant 104 est par ailleurs dépourvu de point anguleux. Cette forme spécifique du tronçon d'extrémité avant 104 permet une meilleure transmission des efforts entre le châssis 16 et la caisse 14, réduisant ainsi les risques de flambage et de rupture de la tôle 94.

Le tronçon central 106 est disposé verticalement au droit d'une console avant 25B.

L'un des deux flasques 96, 97, ici le flasque extérieur 97, est fixé par son tronçon d'extrémité arrière 102 au longeron d'entretoise 62 enserré. Cette fixation est ici obtenue au moyen d'ensembles boulonnés 108. Chaque organe de liaison intermédiaire 92 est ainsi fixé à un longeron d'entretoise 62 respectif.

Le socle 98 s'étend en avant du longeron d'entretoise 62 et relie les deux flasques 96, 97 l'un à l'autre par leurs tronçons d'extrémité avant 104 et centraux 106 uniquement. En d'autres termes, le socle 98 ne s'étend pas entre les tronçons arrière 102 des flasques 96, 97.

Le socle 98 repose contre la face supérieure 29 du longeron de châssis 20 respectif.

L'aile 100 fait saillie transversalement vers l'extérieur du camion 10 depuis un bord supérieur du flasque extérieur 97.

L'aile 100 est en appui contre le plancher 34 de la caisse 14 et est fixée au plancher 34. Cette fixation est ici obtenue au moyen d'un ensemble boulonné 110 engagé à travers le plancher 34 et à travers ladite aile 100.

Chaque organe de liaison intermédiaire 92 comprend également une bride 112 fixée au tronçon central 106 du flasque extérieur 97, ici au moyen d'ensembles boulonnés 114.

Cette bride 112 est en saillie vers l'extérieur relativement audit flasque 97 et fait face à la console avant 24B. Elle est fixée élastiquement à la console avant 24B.

Cette fixation élastique est ici obtenue au moyen d'un ensemble boulonné 116 traversant la bride 112, la console avant 24B et un plot 118 en caoutchouc.

Chaque organe de liaison intermédiaire 92 est de préférence réalisé en acier.

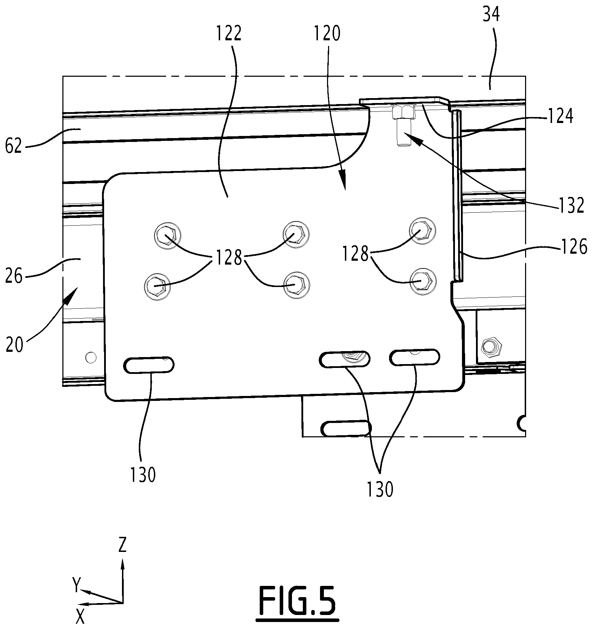

En référence à la Figure 5, le camion 10 comprend également un support de hayon élévateur pour la fixation du hayon élévateur 52 au châssis 16.

Ce support comporte deux platines de support 120 chacune fixée à la caisse 14 et à un longeron de châssis 20 respectif. Cette fixation des platines 120 permet une meilleure transmission vers la caisse 14 des efforts exercés par le hayon élévateur 52. Il est ainsi possible d'augmenter la capacité de chargement du hayon 52.

Chaque platine 120 est avantageusement formée d'une pièce. Elle est typiquement formée d'une tôle pliée.

Chaque platine 120 comprend une plaque 122 sensiblement plane et deux languettes 124, 126 faisant chacune saillie transversalement vers l'extérieur depuis un bord de la plaque 122.

La plaque 122 est sensiblement verticale. Elle présente une grande face en appui contre la face extérieure 26 du longeron de châssis 20 respectif.

La plaque 122 est traversée d'une pluralité d'ensembles boulonnés 128 engagés dans le longeron de châssis 20 respectif, lesdits ensembles boulonnés 128 assurant la fixation de la plaque 122, et donc de la platine 120, audit longeron de châssis 20.

La plaque 122 présente par ailleurs des moyens de fixation du hayon élévateur 52 à la platine 120. Ces moyens de fixation sont ici formés par des orifices traversant 130 oblongs débouchant dans chacune des grandes faces de la plaque 122.

Les languettes 124, 126 comprennent une première languette 124 et une deuxième languette 126.

La première languette 124 fait saillie transversalement vers l'extérieur depuis un bord supérieur de la plaque 122. Elle est sensiblement horizontale.

La première languette 124 est en appui contre le plancher 34 de la caisse 14 et est fixée au plancher 34. Cette fixation est ici obtenue au moyen d'un ensemble boulonné 132 engagé à travers le plancher 34 et à travers ladite languette 124.

Ainsi, chaque platine de support 120 est fixée à la face latérale 26 du longeron de châssis 20 respectif et au plancher 34 de la caisse 14.

La deuxième languette 126 fait saillie transversalement vers l'extérieur depuis un bord arrière de la plaque 122. Elle est sensiblement verticale. Elle rigidifie la platine 120.

Chaque platine de support 120 est de préférence réalisé en acier.

Grâce à l'invention décrite ci-dessus, la caisse 14 est surélevée relativement aux roues du camion 10, ce qui évite de former des tambours dans la caisse 14 pour le passage desdites roues. La fabrication de la caisse 14 est ainsi simplifiée.

De plus, comme la caisse 14 est autoportante, l'entretoise 60 utilisée pour surélever la caisse 14 n'a pas à encaisser d'effort important, si ce n'est l'effort de compression dû au poids de la caisse 14. Il est donc possible d'utiliser une entretoise 60 légère et, de ce fait, conserver une charge utile importante.

Le dispositif avant 90 de liaison intermédiaire entre la caisse 14 et le châssis 16 contribue à éviter que des efforts ne transitent par l'entretoise 60 et participe ainsi à l'allégement du camion 10, sans que cet allégement se fasse au détriment de la sécurité du camion 10.

Enfin, la conception particulière de l'entretoise 60, avec ses longerons 62 et ses supports 70, permet un assemblage particulièrement aisé de la caisse 14 au châssis 16.

## Revendications

1. Camion porteur (10) comprenant un châssis (16) et une caisse autoportante (14) rapportée sur le châssis (16), la caisse autoportante (14) étant en liaison directe avec le châssis (16), **caractérisé en ce que** le camion porteur (10) comprend en outre une entretoise (60) interposée entre le châssis (16) et la caisse autoportante (14).

2. Camion porteur (10) selon la revendication 1, dans lequel le châssis (16) comprend deux longerons de châssis (20) espacés transversalement l'un de l'autre et l'entretoise (60) comprend deux longerons d'entretoise (62) espacés transversalement l'un de l'autre, chaque longeron d'entretoise (62) étant interposé entre la caisse autoportante (14) et un longeron de châssis (20) respectif.

3. Camion porteur (10) selon la revendication 2, dans lequel l'entretoise (60) est dépourvue de traverse reliant les longerons d'entretoise (62) l'un à l'autre.

4. Camion porteur (10) selon la revendication 2 ou 3, dans lequel l'entretoise (60) comprend une pluralité de supports (70) chacun accolé à une face latérale (72) de l'un des longerons d'entretoise (62), la caisse autoportante (14) étant fixée au châssis (16) par des ensembles boulonnés (40) s'étendant au travers desdits supports (70).

5. Camion porteur (10) selon la revendication 4, dans lequel chaque support (70) est monté coulissant selon la direction longitudinale (X) relativement au longeron d'entretoise (62) auquel il est accolé.

6. Camion porteur (10) selon la revendication 4 ou 5, dans lequel le châssis (16) comprend une pluralité de consoles (24A) chacune fixée à une face latérale (26) de l'un des longerons de châssis (20), chaque ensemble boulonné (40) s'étendant à travers l'une desdites consoles (24A) et chaque support (70) étant interposé entre la caisse autoportante (14) et l'une desdites consoles (24A) et ayant une hauteur sensiblement égale à la distance de ladite console (24A) à la caisse autoportante (14).

7. Camion porteur (10) selon l'une quelconque des revendications 2 à 6, comportant un dispositif avant (90) de liaison intermédiaire entre la caisse (14) et le châssis (16), formé de deux organes de liaison intermédiaire (92) fixés chacun à la caisse (14) et à un longeron de châssis (20) respectif.

8. Camion porteur (10) selon la revendication 7, dans lequel chaque organe de liaison intermédiaire (92) est fixé à un longeron d'entretoise (62) respectif.

9. Camion porteur (10) selon l'une quelconque des revendications 2 à 8, comportant un support de hayon élévateur pour la fixation d'un hayon élévateur (52) au châssis (16), ledit support de hayon élévateur comportant deux platines (120) chacune fixée à la caisse autoportante (14) et à un longeron de châssis (20) respectif.

10. Camion porteur (10) selon la revendication 9, dans lequel chaque platine (120) est fixée à une face latérale (26) du longeron de châssis (20) respectif et à un plancher (34) de la caisse autoportante (14).

11. Camion porteur (10) selon l'une quelconque des revendications 1 à 10, dans lequel l'entretoise (60) est réalisée en alliage d'aluminium ou en matériau composite.

## Patentansprüche

1. Lastkraftwagen (10), umfassend ein Fahrgestell (16) und eine selbsttragende Karosserie (14), die auf das Fahrgestell (16) aufgesetzt ist, wobei die selbsttragende Karosserie (14) in direkter Verbindung mit dem Fahrgestell (16) ist, **dadurch gekennzeichnet, dass** der Lastkraftwagen (10) ferner einen Abstandhalter (60) umfasst, der zwischen dem Fahrgestell (16) und der selbsttragenden Karosserie (14) eingefügt ist.

2. Lastkraftwagen (10) nach Anspruch 1, wobei das Fahrgestell (16) zwei quer voneinander beabstandete Fahrgestelllängsträger (20) umfasst und der Abstandhalter (60) zwei Abstandhalterlängsträger (62) umfasst, die quer voneinander beabstandet sind, wobei jeder Abstandhalterlängsträger (62) zwischen der selbsttragenden Karosserie (14) und einem jeweiligen Fahrgestelllängsträger (20) angeordnet ist.

3. Lastkraftwagen (10) nach Anspruch 2, wobei der Abstandhalter (60) keine Querstrebe aufweist, die Abstandhalterlängsträger (62) miteinander verbindet.

4. Lastkraftwagen (10) nach Anspruch 2 oder 3, wobei der Abstandhalter (60) eine Vielzahl von Halterungen (70) umfasst, die jeweils an eine Seitenfläche (72) eines der Abstandhalterlängsträgers (62) angefügt sind, wobei die selbsttragende Karosserie (14) durch Schraubenanordnungen (40), die sich durch die Halterungen (70) hindurch erstrecken, an dem Fahrgestell (16) befestigt ist.

5. Lastkraftwagen (10) nach Anspruch 4, wobei jede Halterung (70) in Längsrichtung (X) in Bezug auf den Abstandhalterlängsträger (62), an den sie angefügt ist, verschiebbar montiert ist.

6. Lastkraftwagen (10) nach Anspruch 4 oder 5, wobei das Fahrgestell (16) eine Vielzahl von Konsolen (24A) umfasst, die jeweils an einer Seitenfläche (26) eines der Fahrgestelllängsträger (20) befestigt sind, wobei sich jede Schraubenanordnung (40) durch eine der Konsolen (24A) erstreckt und jede Halterung (70) zwischen der selbsttragenden Karosserie (14) und einer der Konsolen (24A) angeordnet ist und eine Höhe aufweist, die im Wesentlichen gleich wie der Abstand von der Konsole (24A) zu der selbsttragenden Karosserie (14) ist.

7. Lastkraftwagen (10) nach einem der Ansprüche 2 bis 6, umfassend eine vordere Vorrichtung (90) zur Zwischenverbindung zwischen der Karosserie (14) und dem Fahrgestell (16), die aus zwei Zwischenverbindungsgliedern (92) gebildet ist, die jeweils an der Karosserie (14) und an einem jeweiligen Fahrgestelllängsträger (20) befestigt sind.

8. Lastkraftwagen (10) nach Anspruch 7, wobei jedes Zwischenverbindungsglied (92) an einem jeweiligen Abstandhalterlängsträger (62) befestigt ist.

9. Lastkraftwagen (10) nach einem der Ansprüche 2 bis 8, umfassend eine Ladeklappenhalterung zur Befestigung einer Ladeklappe (52) an dem Fahrgestell (16), wobei die Ladeklappenhalterung zwei Platten (120) aufweist, die jeweils an der selbsttragenden Karosserie (14) und an einem jeweiligen Fahrgestelllängsträger (20) befestigt sind.

10. Lastkraftwagen (10) nach Anspruch 9, wobei jede Platte (120) an einer Seitenfläche (26) des jeweiligen Fahrgestelllängsträgers (20) und an einem Boden (34) der selbsttragenden Karosserie (14) befestigt ist.

11. Lastkraftwagen (10) nach einem der Ansprüche 1 bis 10, wobei der Abstandhalter (60) aus einer Aluminiumlegierung oder einem Verbundmaterial gefertigt ist.

## Claims

1. A carrier truck (10) comprising a chassis (16) and a self-supporting body (14) attached to the chassis (16), the self-supporting body (14) being directly connected to the chassis (16), **characterized in that** the carrier truck (10) further comprises a strut (60) interposed between the chassis (16) and the self-supporting body (14).

2. The carrier truck (10) according to claim 1, wherein the chassis (16) comprises two transversely spaced-apart chassis side members (20) and the strut (60) comprises two transversely spaced-apart strut side members (62), each strut side member (62) being interposed between the self-supporting body (14) and a respective chassis side member (20).

3. The carrier truck (10) according to claim 2, wherein the strut (60) is devoid of a cross member connecting the strut side members (62) to each other.

4. The carrier truck (10) according to claim 2 or 3, wherein the strut (60) comprises a plurality of brackets (70) each abutting a side face (72) of one of the strut members (62), the self-supporting body (14) being secured to the chassis (16) by bolt assemblies (40) extending through said brackets (70).

5. The carrier truck (10) according to claim 4, in which each bracket (70) is slidably mounted in the longitudinal direction (X) relative to the strut side member (62) to which it is attached.

6. The carrier truck (10) according to claim 4 or 5, wherein the chassis (16) comprises a plurality of consoles (24A) each attached to a side face (26) of one of the chassis side members (20), each bolt assembly (40) extending through one of said consoles (24A) and each bracket (70) being interposed between the self-supporting body (14) and one of said consoles (24A) and having a height substantially equal to the distance of said console (24A) from the self-supporting body (14).

7. The carrier truck (10) according to any one of claims 2 to 6, comprising a front intermediate connecting device (90) between the body (14) and the chassis (16), formed by two intermediate connecting members (92) each fixed to the body (14) and to a respective chassis side member (20).

8. The carrier truck (10) according to claim 7, wherein each intermediate connecting member (92) is attached to a respective strut side member (62).

9. The carrier truck (10) according to any one of claims 2 to 8, comprising a tailgate support for attaching a tailgate (52) to the chassis (16), said tailgate support comprising two plates (120) each attached to the self-supporting body (14) and to a respective chassis side member (20).

10. The carrier truck (10) according to claim 9, wherein each plate (120) is attached to a side face (26) of the respective chassis side member (20) and to a floor (34) of the self-supporting body (14).

11. The carrier truck (10) according to any one of the claims 1 to 10, wherein the strut (60) is made of aluminium or a composite material.
